**Europäisches Patentamt**

**European Patent Office**

**Office européen des brevets**

(19)

(11) Veröffentlichungsnummer : **0 064 094**
**B1**

(12) # EUROPÄISCHE PATENTSCHRIFT

(45) Veröffentlichungstag der Patentschrift :
**30.01.85**

(21) Anmeldenummer : **81108645.3**

(22) Anmeldetag : **21.10.81**

(51) Int. Cl.⁴ : **H 02 J 13/00**, H 02 B 1/24,
H 02 H 7/22

(54) **Elektrische Schaltungsanordnung zur Nachbildung einer Sammelschienenanlage.**

(30) Priorität : **24.04.81 DE 3116392**

(43) Veröffentlichungstag der Anmeldung :
**10.11.82 Patentblatt 82/45**

(45) Bekanntmachung des Hinweises auf die Patenterteilung : **30.01.85 Patentblatt 85/05**

(84) Benannte Vertragsstaaten :
**AT BE CH FR IT LI NL SE**

(56) Entgegenhaltungen :
**DE-A- 2 753 659**
**DE-B- 1 264 580**

(73) Patentinhaber : **Siemens Aktiengesellschaft**
**Berlin und München Wittelsbacherplatz 2**
**D-8000 München 2 (DE)**

(72) Erfinder : **Gmeinder, Georg, Dipl.-Ing.**
**Daimlerstrasse 38**
**D-8520 Erlangen (DE)**
Erfinder : **Segschneider, Josef**
**Lederhosenstrasse 27**
**D-8551 Röttenbach (DE)**

EP 0 064 094 B1

## Beschreibung

Die Erfindung bezieht sich auf eine elektrische Schaltungsanordnung zur Nachbildung einer Sammelschienenanlage der im Oberbegriff des Anspruchs 1 näher bezeichneten Art.

Solche Schaltungsanordnungen dienen der Spannungsmessung zum Zwecke der Prüfung und Überwachung jeweils zu Schaltkomplexen zusammengeschalteter Teile von Sammelschienenanlagen. Dazu bedient man sich der in den Abzweigen der Sammelschienenanlagen vorhandenen Spannungswandler.

Aus der DE-B1 1 264 580 ist eine Schaltungsanordnung der obenbezeichneten Art bekannt, bei der die Meßleitungen für die Sammelschienenspannung über geschlossene Kontakte (Umschaltkontakte) von jedem Abzweig zugeordneten Umschaltrelais durchverbunden sind, wenn kein Abzweig an die betreffende Sammelschienenleitung angeschlossen ist. Sobald eine Verbindung zwischen einem Abzweig und der betreffenden Sammelschienenleitung hergestellt ist, wird das zugehörige Umschaltrelais angeregt und seine Wechselkontakte schalten um. Dadurch werden die Meßleitungen an dieser Stelle unterbrochen und an die Sekundärwicklungen des dem betreffenden Abzweig zugeordneten Spannungswandlers angeschlossen. Hierdurch wird erreicht, daß immer derjenige Spannungswandler zum Messen der Sammelschienenspannung verwendet wird, dessen Abzweig an die betreffende Sammelschienenleitung angeschlossen ist und der den herausgeführten Meßleitungen am nächsten liegt.

Diese bekannte Schaltungsanordnung erfordert Relais, die mit zumindest vier Umschaltkontakten für die Meßspannung und weiteren Kontakten für Steuerzwecke ausgerüstet sind. Eine Realisierung einer derartigen Schaltungsanordnung in Flachbaugruppen und Einschubtechnik nach dem neueren Stand der Technik mit Serienbauteilen ist nicht möglich.

Der Erfindung liegt die Aufgabe zugrunde, eine Schaltungsanordnung der obengenannten Art so zu gestalten, daß sie aus gleichartigen, in vorverdrahteten Standrahmen steckbaren Flachbaugruppen gebildet werden kann, die sich zu Funktionseinheiten zusammenfassen lassen.

Diese Aufgabe wird durch die im Anspruch 1 gekennzeichnete Erfindung gelöst.

Der Vorteil dieser erfindungsgemäßen Schaltungsanordnung besteht vor allem darin, daß sie sich aus vorgefertigten standardisierten Flachbaugruppen zusammenstellen und an die jeweilige Ausführungsform der Sammelschienenanlage sehr flexibel und ohne besonderen Installationsaufwand an Ort und Stelle anpassen läßt. Dies vor allem deshalb, weil auch die Standrahmen sich in genormter Weise für die Nachbildung beliebiger Sammelschienenanlagen vorbereiten lassen. Es ist lediglich eine der Größe der Sammelschienenanlage entsprechende Anzahl von Standrahmen bereitzustellen, die sich über vorbereitete Verbindungspunkte zur richtigen Gesamtfunktion zusammenschalten lassen.

Vorteilhafte Weiterbildungen und Ausgestaltungen der Schaltungsanordnung nach Anspruch 1 sind in den Unteransprüchen gekennzeichnet.

Ein Ausführungsbeispiel der Erfindung wird anhand von Schaltbildern im folgenden näher erläutert. Es zeigen :

Figur 1 die Nachbildung eines Abschnittes einer Sammelschienenanlage mit drei Sammelschienenleitungen und drei Abzweigen ;

Figur 2 die Steuerschaltung für die Nachbildungsschaltung nach Fig. 1 ;

Figur 3 die Nachbildungsschaltung für die Verbindung von zwei Sammelschienenabschnitten gemäß Fig. 1 und

Figur 4 die Steuerschaltung für die Nachbildungsschaltung nach Fig. 3.

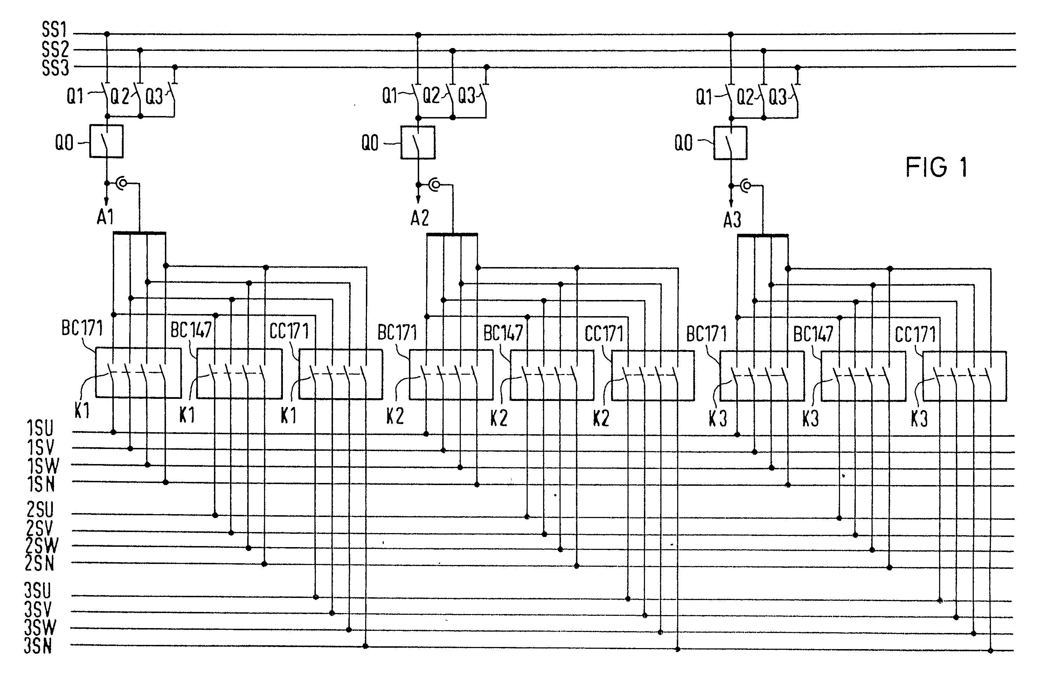

In Fig. 1 sind mit SS 1, SS 2 und SS 3 je eine dreiphasige Hochspannungs-Sammelschienenleitung bezeichnet. Für diese Sammelschienenleitungen stehen drei Abzweige A1, A2, A3 zur Verfügung, die jeweils über Trennschalter Q1, Q2, Q3 und Leistungsschalter Q0 wahlweise mit einer der Sammelschienenleitungen verbunden werden können. Jeder der drei Abzweige besitzt einen dreiphasigen Spannungswandler T1, T2 bzw. T3. Diese Elemente bilden die Primäranlage. Die Spannungswandler sing über entsprechende Zuleitungen mit der Schaltungsanordnung zur Nachbildung der Primäranlage verbunden. Die einzelnen Verbindungsleitungen, die denen der Abzweige zu jeder der Sammelschienenleitungen entsprechen, sind an im Ruhezustand geöffnete Kontaktsätze K1, K2 und K3 von Abweig-Zuschaltrelaisgruppen BC 171, BC 147 und CC 171 angeschlossen, welche bei entsprechender Zuschaltung eines Abzweigs eine Verbindung zu den Sammelschienennachbildungsleitungen 1SU, 1SV, 1SW, 1SN für die Spannungsmessung der Sammelschienenleitung SS 1 ; 2SUN 2SV, 2SW, 2SN für die Spannungsmessung der Sammelschienenleitung SS 2 und 3SU, 3SV, 3SW, 3SN für die Spannungsmessung der Sammelschienenleitung SS 3 herstellen.

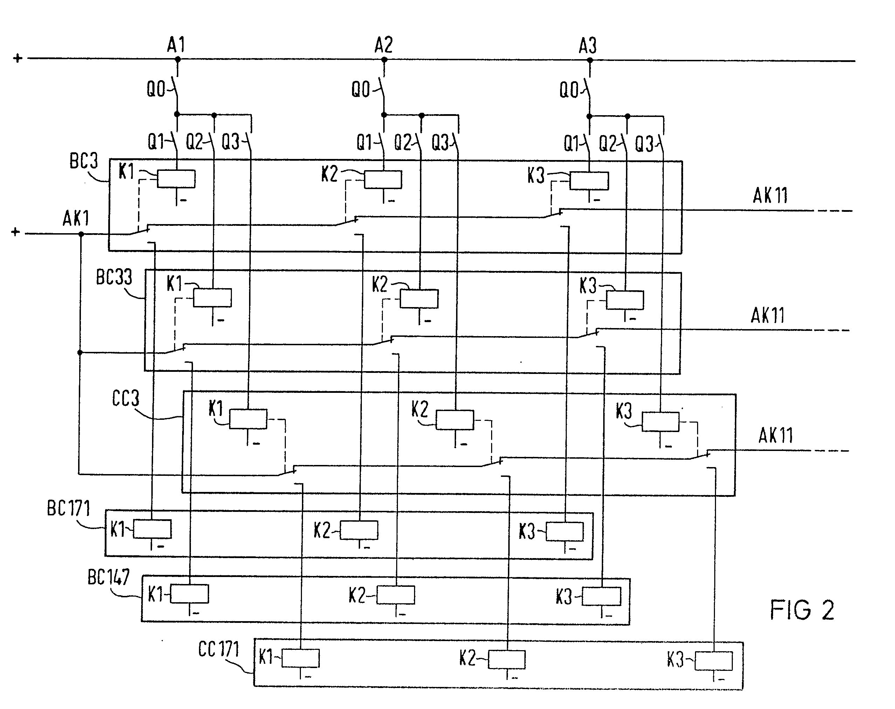

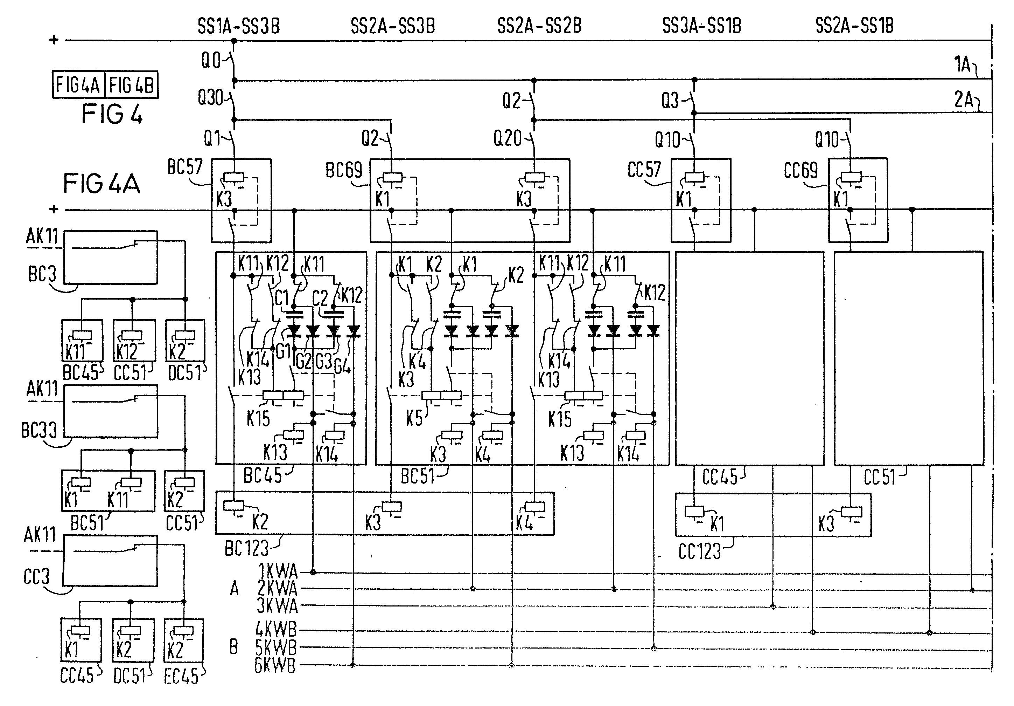

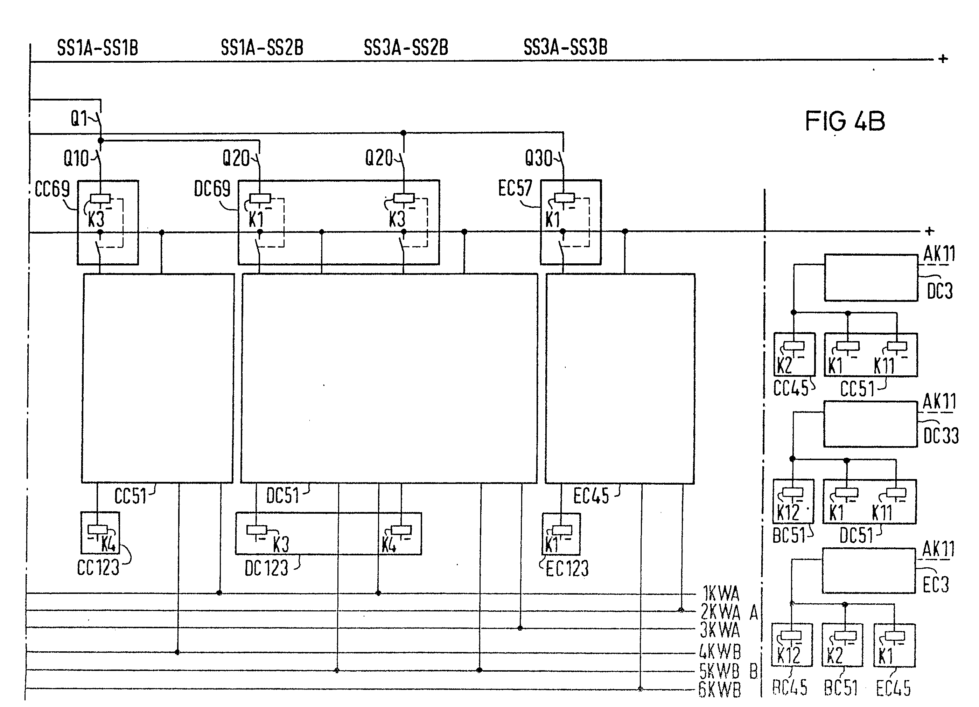

In Fig. 2 sind die genannten Abzweig-Zuschaltrelaisgruppen mit den zugeordneten Abzweig-Steuerrelaiskreisen dargestellt. Dabei sind die Abzweig-Steuerrelais K1, K2 und K3 entsprechend ihrer Zuordnung zu den Sammelschienenleitungen SS 1, SS 2 bzw. SS 3 der Primäranlage zu Gruppen zusammengefaßt, wobei die mit BC 3 bezeichnete Gruppe der Sammelschienenleitung SS 1, die mit BC 33 bezeichnete Gruppe der Sammelschienenleitung SS 2 und die mit CC 3 bezeichnete Gruppe der Sammelschienenleitung SS 3 zugeordnet sind. Jedes dieser Relais jeder Gruppe ist mit einem Umschaltkontakt versehen. Die Öffner dieser Umschaltkontakte jeder Relaisgruppe BC 3, BC 33 bzw. CC 3 bilden Reihenschaltungen AK1-AK11, die ihrerseits zusammen mit den Erregerspulen von Abzweig-Abfragerelais BC 45, K11 : CC 51, K12 ; DC 51, K2 sowie BC 51, K1, K11 ; CC 51, K2 ; und CC 45, K1 ; DC 51, K12 ; und EC 45, K2 (Fig. 4) in Reihe geschaltet sind und deren Erregerstromkreise bilden. Die Schließer dieser Umschalter sind mit je einer Erregerspule K1, K2, K3 von Abzweig-Zuschaltrelais verbunden, die ebenfalls entsprechend den Abzweig-Steuerrelais in Gruppen BC 171, BC 147 und CC 171 zusammengefaßt sind (Fig. 1). Dabei ist die Gruppe BC 171 der Sammelschienenleitung SS 1, die Gruppe BC 147 der Sammelschienenleitung SS 2 und die Gruppe CC 171 der Sammelschienenleitung SS 3 mit je einer Relaisspule für je einen Abzweig zugeordnet.

Die Schaltungsanordnung nach den Fig. 1 und 2 bewirkt auf folgende Weise, daß auch bei der Zuschaltung mehrerer Abzweige auf eine einzige Sammelschiene nur jeweils ein Spannungswandler T1, T2 oder T3 einer dieser Abzweige A1, A2, A3 für die Spannungsmessung herangezogen wird. Es sei angenommen, daß die Trennschalter Q1 der Abzweige 1 und 2 sowie die zugeordneten Leistungsschalter Q0 geschlossen und somit die Abzweige A1 und A2 mit der Sammelschienenleitung SS 1 verbunden sind. Durch das Schließen der den Trennschaltern Q1 und den Leistungsschaltern Q0 zugeordneten Hilfskontakte gleicher Bezeichnung in Fig. 2 werden die Relaisspulen BC 3, K1 und K2 erregt. Dabei werden die beiden diesen Relais zugeordneten Umschalter betätigt, was zur Folge hat, daß das Abzweig-Zuschaltrelais BC 171, K1 erregt wird, seine Kontakte BC 171, K1 (Fig. 1) schließt und den Spannungswandler T1 mit der Schaltungsanordnung verbindet. Das durch den Umschaltkontakt von BC 3, K2 ebenfalls angesteuerte Abzweig-Zuschaltrelais BC 171, K2 kann deswegen nicht erregt werden, weil durch Betätigen des Umschaltkontaktes des Abzweig-Steuerrelais BC3, K1 die Erregerstromkreise aller in der Kontaktkette AK1-AK11 rechts davon befindlichen Erregerstromkreise der Abzweig-Zuschaltrelais unterbrochen sind. Erst. wenn der Abzweig A1 von der Sammelschienenleitung SS 1 getrennt wird, so daß der Umschaltkontakt des Abzweig-Steuerrelais BC3, K1 wieder in seinen ursprünglichen Zustand zurückkehrt und damit das Abzweig-Zuschaltrelais BC 171, K1 abfällt, seine Kontakte BC 171, K1 (Fig. 1) öffnet und damit den Spannungswandler T1 von der Schaltungsanordnung trennt, kann das Abzweig-Zuschaltrelais BC 171, K2 erregt werden, so daß seine Kontakte BC 171, K2 (Fig. 1) schließen und der Spannungswandler T2 des Abzweigs A2 in Funktion tritt. Dieser Vorgang wiederholt sich bei entsprechenden anderen Abzweig-Sammelschienenleitungs-Kombinationen. Dabei hat erkennbar der jeweils links befindliche Spannungswandler den Vorrang vor den weiter rechts angeordneten im Falle gleicher Verbindungswege. Damit ist sichergestellt, daß in bezug auf die Wahl der jeweiligen Abzweige keine Parallelschaltung von Spannungswandlern erfolgen kann.

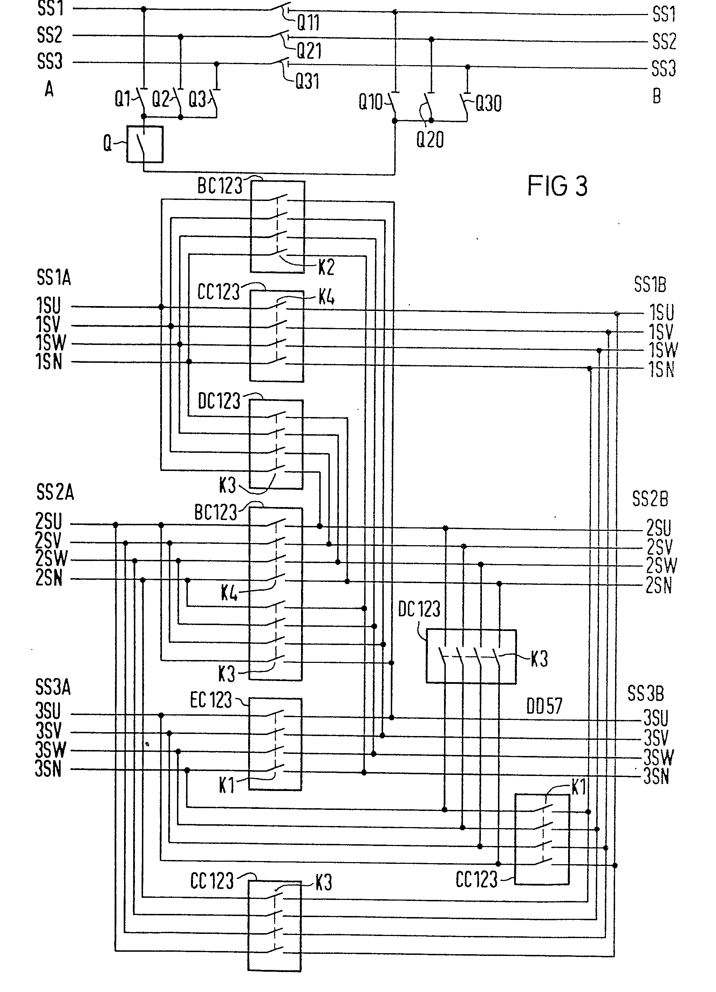

In Fig. 3 ist nun eine Sammelschienenanlage dargestellt, die aus zwei Abschnitten A und B mit je drei Sammelschienenleitungen besteht. Dabei sind die Abzweige pro Abschnitt, die denen der Fig. 1 entsprechen, zur besseren Übersicht weggelassen. Jede Sammelschienenleitung eines jeden Abschnittes ist über Trenn- und Leistungsschalter miteinander verbindbar. Dazu sind den einzelnen Sammelschienenleitungen des Abschnittes A die Trennschalter Q, Q2, Q3 und den entsprechenden Sammelschienenleitungen des Abschnittes B die Trennschalter Q10, Q20 und Q30 zugeordnet. Um solche Querverbindungen auch unter Leistung schalten zu können, werden die entsprechenden vorbereiteten Querverbindungen erst dann wirksam, wenn der Leistungsschalter Q geschlossen ist. Mit Hilfe der Kuppelschalter Q11, Q21 und Q31 können die beiden Sammelschienenabschnitte A und B auch direkt durchgeschaltet werden. Ersichtlich sind also insgesamt neun Kuppelverbindungen schaltbar, davon drei als Längsverbindungen wahlweise über die Kuppelschalter Q11, Q21 und Q31 und sechs unter Einbeziehung des Leistungsschalters Q0 über die Trennschalter Q1, Q2, Q3 und Q10, Q20, Q30 als Längs- und Querverbindung. Diese aus den zwei Abschnitten A und B bestehende Sammelschienenanlage ist durch die darunter dargestellte Schaltungsanordnung nachgebildet. Dabei entsprechen den Sammelschienenleitungen SS 1, SS 2 und SS 3 des Abschnittes A die Nachbildungsleitungen SS 1A mit den Sammelschienennachbildungen 1SU, 1SV, 1SW und 1SN, SS 2A mit den Sammelschienennachbildungen 2SU, 2SV, 2SW und 2SN sowie SS 3A mit den Sammelschienennachbildungen 3SU, 3SV, 3SW und 3SN ; den Sammelschienenleitungen SS 1, SS 2 und SS 3 des Abschnittes B die Nachbildungsleitungen SS 1B mit den Sammelschienennachbildungen 1SU, 1SV, 1SW, 1SN ; SS 2B mit den Sammelschiennachbildungen 2SU, 2SV, 2SW, 2SN und SS 3B mit den Sammelschienennachbildungen 3SU, 3SV, 3SW, 3SN. Die Kuppelschalter Q11, Q21 und Q31 sind durch die Schließkontakte CC 123, K4 ; BC 123, K4 und EC 123, K1 von Abschnittkuppelrelais nachgebildet, während die Trennschalter Q1, Q2, Q3 und Q10, Q20, Q30 zur Längs- und Querverbindung der Sammelschienenleitungen der Abschnitte A und B über den Leistungsschalter Q durch die Kontakte BC 123, K2 ; DC 123, K3 ; BC 123, K3 ; CC 123, K3 ; CC 123, K1 und DC 123, K3 von Abschnitt-Kuppelrelais nachgebildet sind.

Die Steuerschaltung für die Erregerspulen der Abschnitt-Kuppelrelais BC 123, CC 123, DC 123 und EC 123 ist in den Fig. 4a und 4b dargestellt. Darin ist zu erkennen, daß die Erregerspulen der Abschnitt-Kuppelrelais zu Gruppen mit den Bezeichnungen BC 123, CC 123, DC 123 und EC 123 zusammengefaßt sind. Im oberen Teil der Figuren 4a und 4b sind Hilfskontakte der Trennschalter der Abschnitte A und B, nämlich Q1, Q2, Q3 sowie Q10, Q20 und Q30 sowie des Leistungsschalters Q dargestellt. Jede der möglichen Schalterkombinationen bildet mit je einer Erregerspule eines Abschnitt-Steuerrelais einen Erregerstromkreis. Es gehören zu der Schalterkombination Q30, Q1 die Relaisspule BC 57, K3 ; zu der Schalterkombination Q30, Q2 die Relaisspule BC 69, K1 usw. Dabei sind die den einzelnen Trennschaltern Q1, Q2, Q3 bzw. Q10, Q20, Q30 zugeordneten Erregerspulen mit jeweils zugehörigen Schließkontakten funktionsgruppenweise zusammengefaßt. Jedem dieser Abschnitt-Steuerrelais ist eine Kuppelweg-Steuerschaltung in BC 45 oder BC 51, CC 45, CC 51, DC 51 bzw. EC 45 zugeordnet. Die Kuppelweg-Steuerschaltungen besitzen von ihnen zugeordneten gepolten Relais K5, K15 betätigbare Schließkontakte, die mit den Schließkontakten der Abschnitt-Steuerrelais in Reihe geschaltet im Erregerstromkreis der Abschnitt-Kuppelrelais liegen. Außerdem sind den Kuppelweg-Steuerschaltungen die Abzweig-Abfragerelais K1, K2, K11, K12 sowie die Kuppelweg-Abfragerelais K3, K4, K13, K14 zugeordnet, die die gepolten Relais K5, K15 in noch zu beschreibender Weise steuern.

Die Funktionen der in den Fig. 4a und 4b dargestellten Kuppelweg-Nachbildungsschaltung ist folgende. Zunächst sei angenommen, daß die Hilfsschalter der Kuppelweg-Trennschalter Q30 und Q1 geschlossen und alle anderen geöffnet sind. Nach Schließen des Hilfskontaktes des Leistungsschalters Q zieht zunächst das Kuppelweg-Steuerrelais BC 57 an und schließt seinen im Erregerstromkreis des Abschnitt-Kuppelrelais BC 123, K2 befindlichen Kontakt. Damit ist dieses zur Erregung vorbereitet. Es sei nun weiter angenommen, daß nur der Abzweig A1 in Fig. 1 mit der Sammelschienenleitung SS 1 verbunden ist, so daß das Abzweig-Steuerrelais BC 3, K1 (Fig. 2) erregt ist und sich sein Umschaltkontakt in der Schließerstellung befindet. Dadurch ist die Öffner-Reihenschaltung AK1-AK11 unterbrochen, das Abzweig-Zuschaltrelais BC 171, K1 erregt und sein Kontaktsatz K1 (Fig. 1) geschlossen, so daß der Spannungswandler T1 mit der Nachbildung der Sammelschienenleitung SS 1 verbunden ist. Durch die Unterbrechung der Schließerkontaktreihe AK1-AK11 sind die Abzweig-Abfragerelais BC 45, K11 ; CC 51, K12 und DC 51, K2 im nicht erregten und die übrigen Abzweig-Abfragerelais BC 51, K1, K11 ; CC 51, K2 ; CC 45, K1 ; DC 51, K12 und EC 45, K2 im erregten Zustand. Ebenso sind die im rechten Teil der Fig. 4b dargestellten Abzweig-Abfragerelais CC 45, K2; CC 51, K1, K11 ; BC 51, K12 ; DC 51, K1, K11 ; BC 45, K12 ; BC 51, K2 und EC 45, K1 erregt. Diese Abzweig-Abfragerelais gehören zu Abschnitt B der Sammelschienenanlage, die mit dem in den Fig. 1 und 2 dargestellten Abzweig-Schaltungsteil des Abschnittes A identisch und daher nicht dargestellt ist. Die nicht erregten Abzweig-Abfragerelais BC 45, K11 ; CC 51, K12 und DC 51, K2 bewirken, daß sich die dem Abzweig-Abfrage-relais BC 45, K11 zugeordneten Kontakte der Kuppelweg-Steuerschaltung BC 45 in der dargestellten Position befinden. Die Position der Kontakte der übrigen Abzweig-Abfrage-

relais in den jeweils zugeordneten Kuppelweg-Steuerschaltungen ist ohne Belange da deren zugeordnete Abschnitt-Kuppelrelais durch die geöffneten Kontakte der übrigen Kuppelweg-Steuerrelais nicht vorbereitet sind. Unter der obigen Annahme, daß im Abschnitt B der Sammelschienenanlage kein Abzweig angeschlossen ist, ist das Relais BC 45, K12 erregt und in der Kuppelweg-Steuerschaltung BC 45 über den geschlossenen Ruhekontakt BC 45, K11 auch das Kupplungs-Abfragerelais BC 45, K13 erregt und sein Ruhekontakt K13 geöffnet. Über die geschlossene Kontaktkette BC 57, K3, BC 45, K12 und BC 45, K14 wird nun das polarisierte Relais BC 45, K15 gesetzt und schließt seine Kontakte. Das vorbereitete Abschnitt-Kuppelrelais BC 123, K2 wird damit erregt und stellt die in Fig. 3 dargestellte Verbindung zwischen der Nachbildung der Sammelschienenleitung SS 1 des Abschnittes A und der Nachbildung der Sammelschienenleitung SS 3 des Abschnittes B her.

Durch das Schließen der dem gepolten Relais BC 45, K15 zugeordneten Kontakte wird auch das Kupplungs-Abfragerelais BC 45, K14 erregt und öffnet seinen Ruhekontakt K14. Damit ist die linke Spule des gepolten Relais BC 45, K15 von ihrem Erregerstromkreis getrennt, dieses bleibt aber als gepoltes Relais in der eingenommenen Position. Wird nun etwa ein Abzweig im nichtdargestellten Abschnitt B an den bereits gekuppelten Teil der Sammelschienenanlage bzw. ihrer Nachbildung, also etwa an die Sammelschienenleitung SS 3 im Abschnitt B angeschlossen, so öffnet die Ruhekontaktkette der Abzweig-Steuerrelais dieses Abschnittes und unterbricht damit den Erregerstromkreis des Abzweig-Abfragerelais BC 45, K12. Damit erhält die rechte Spule des gepolten Relais BC 45, K15 durch den geschlossenen Ruhekontakt BC 45, K12 über eine Kondensator-Gleichrichterkette BC 45, C2, G3 einen Stromstoß als Rücksetzbefehl und öffnet die ihm zugeordneten Kontakte. Damit wird der Erregerstromkreis des Abschnitt-Kuppelrelais unterbrochen, so daß dieses seine Kontakte K2 in Fig. 3 öffnet und die Verbindung der Meßspannungsleitungen der beiden Sammelschienenabschnitte aufhebt.

Um zu erreichen, daß die jeweils zusammengeschalteten Sammelschienenabschnitte mit nicht mehr als einer einzigen Meßspannung versorgt werden, sind den einzelnen Meßspannungsleitungen SS 1A, SS 2A, SS 3A bzw. SS 1B, SS 2B und SS 3B jeweils Kuppelwegleitungen 1KWA, 2KWA, 3KWA, bzw. 1KWB, 2KWB, bzw. 3KWB zugeordnet. Diese sind mit den Erregerspulen der Kupplungs-Abfragerelais K3, K4 bzw. K13, K14 der den jeweiligen Sammelschienenkombination entsprechenden Kuppelweg-Steuerschaltungen verbunden. Wenn nun auf einer dieser Kuppelweg-Nachbildungsleitung bereits eine Spannung liegt, wird das entsprechende Spannungs-Abfragerelais K3, K4 bzw. K13, K14 erregt und öffnet seine jeweiligen Ruhekontakte in der betreffenden Kuppelweg-Steuerschaltung. Dadurch ist erreicht, daß die linken Erregerspulen der gepolten Relais K5 bzw. K15 in der betreffenden Kuppelweg-Steuerschaltung nicht mehr erregt werden können, so daß die gewünschte Verbindung in einem solchen Fall nicht zustande kommen kann. Diese anhand von wenigen Abzweig- bzw. Abschnittkupplungen dargestellten Schaltvorgänge lassen sich aufgrund des identischen Aufbaues der einzelnen Schalteinheiten, die sich in Flachbaugruppen zusammenfassen lassen, beliebig vervielfältigen.

**Ansprüche**

1. Elektrische Schaltungsanordnung zur Nachbildung einer Sammelschienenanlage mit Sammelschienenleitungen (551, 552, 553), von denen jede aus einer der Art der Anlage entsprechenden Anzahl von Sammelschienen gebildet ist, wobei die Sammelschienenanlage in mehrere getrennte Abschnitte unterteilbar ist, von denen jeder aus einer Anzahl von Sammelschienenleitungen gebildet ist die einzeln untereinander über Kupplungsschaltmittel miteinander verbindbar sind, und denen mit einem Spannungswandler (T1, T2, T3) versehene Abzweige (A1, A2, A3) zugeordnet sind, dei über Trenn- (Q1, Q2, Q3) und Leistungsschalter (Q0) an die zugeordneten Sammelschienenleitungen anschließbar sind, und der Schaltungsanordnung zum Zwecke der Spannungsmessung des jeweils einen Schaltkomplex bildenden zusammengeschalteten Teils der Sammelschienenanlage unter Benutzung der vorhandenen Spannungswandler (T1, T2, T3) Abschnitt-Kuppelrelais (BC123...) zum Nachbilden des der Schaltsituation der Sammelschienenanlage entsprechenden Schaltkomplexes der Schaltungsanordnung, (Abzweig Zuschaltrelais (BC171...) zum Verbinden einer Meßleitung der Schaltungsanordnung mit einem Spannungswandler (T1, T2, T3) der **Sammelschienenanlage sowie Abzweig-Abfragerelais (BC45, K11, K12...)** zugeordnet sind, die bei der Einbeziehung mehrerer Abzweige in einen Schaltkomplex die Abzweig-Zuschaltrelais (BC171...) im Sinne der Verbindung nur eines einzigen Spannungswandlers (T1, T2, T3) mit dem betreffenden Schaltkomplex der Schaltungsanordnung steuern, gekennzeichnet durch die Kombination folgender Merkmale :

a) jeder Sammelschienenleitung eines jeden nachgebildeten Abzweigs ist ein bei deren Zuschalten von Hilfskontakten der Abzweigschaltmittel der Sammelschienenanlage betätigtes Abzweig-Steuerrelais (BC3, K1, K2, K3...) zugeordnet, das Umschaltkontakte besitzt, deren Öffner gemeinsam eine Reihenschaltung bilden, die sich im Erregerstromkreis je eines Abzweig-Abfragerelais (BC 45, K11, K12...) befinden, die dieses im geschlossenen Zustand der Reihenschaltung betätigen, während jeder der Schließer im Erregerstromkreis eines ihm zugeordneten Abzweig-Zuschaltrelais (BC 171...) zu dessen Betätigung angeordnet ist ;

b) jedem Kuppelweg von Sammelschienenleitungen ist ein von Hilfskontakten der Kupplungsschaltmittel der Sammelschienenanlage mit vollzogener Kupplung erregbares Kuppelweg-Steuerrelais (BC 57...) und ein Abschnitt-Kuppelrelais (BC 123...) zur Kupplung der den Sammelschienenleitungen unterschiedlicher Sammelschienenabschnitte nachgebildeten Verbindungen der Schaltungsanordnung zugeordnet ;

c) die Erregerstromkreise der Abschnitt-Kuppelrelais (BC 123...) sind von den jeweils zugeordneten Kuppelweg-Steuerrelais (BC 57...) und Abzweig-Abfragerelais (BC 45, K11, K12...) derart gesteuert, daß das jeweilige Abschnitt-Kuppelrelais (BC 123...) nur dann anspricht, wenn sich das zugeordnete Kuppelweg-Steuerrelais (BC 57...) und höchstens eines der zugeordneten Abzweig-Abfragerelais (BC 45, K11, K12...) in erregtem Zustand befinden.

2. Schaltungsanordnung nach Anspruch 1, dadurch gekennzeichnet, daß den Abzweig-Abfragerelais (BC 45, K11, K12...) zur Steuerung der Abschnitt-Kuppelrelais · (BC 123...) Kuppelweg-Steuerschaltungen (BC45...) zugeordnet sind, die aus jeweils einem von den Abzweig-Abfragerelais (BC 45, K11, K12...) und von Spannungs-Abfragerelais (BC 45, K13, K14...) derart gesteuerten gepolten Relais (BC 45, K15...) gebildet ist, daß diese die Erregerstromkreise der zum Ansprechen vorbereitenden Abschnitt-Kuppelrelais (BC 123...) dann schließen, wenn sich höchstens eines der Abzweig-Abfragerelais (BC 45, K11, K12...) in erregtem Zustand befindet und dann öffnen, wenn durch Zuschalten eines Abzweiges auf einen bisher nicht mit einem Abzweig beschalteten, aber im Schaltkomplex befindlichen Abschnittes das dann abfallende Abzweig-Abfragerelais (BC 45, K11, K12...) einen Steuerimpuls als Rücksetzimpuls für das gepolte Relais (BC 45, K15...) und das dann erregte Spannungs-Abfragerelais (BC 45, K13, K14...) ein erneutes Setzen des gepolten Relais (BC 45, K15...) verhindert, so daß zugeordnete Kuppelrelais (BC 123...) abfällt und die gekuppelten Abschnitte trennt.

3. Elektrische Schaltungsanordnung nach Anspruch 1 oder 2, dadurch gekennzeichnet, daß einschwallfähige Relais verwendet sind, die nach Funktionsgruppen geordnet in vorverdrahteten Standardrahmen einsteckbare Flachbaugruppen **zusammengefaßt sind, und diese Standardrahmen in genormter Weise für die Nachbildung von mehreren Abzweigen einer Sammelschienenanlage mit jeweils zwei Abschnitten und den möglichen Kuppelwegen vorbereitet sind.**

**Claims**

1. An electrical circuit arrangement for reproducing a bus-bar system with bus-bar lines (SS1, SS2, SS3), each of which is formed from a number of bus-bars which corresponds to the type of system, where the bus-bas system can be divided into a plurality of separate sections, each of which is formed from a number of bus-bar lines which can be individually connected to one another by means of coupling switching means, and to which are assigned branches (A1, A2, A3) provided with a voltage converter (T1, T2, T3) and connectable to the assigned bus-bar lines by means of separating switches (Q1, Q2, Q3) and power switches (Q0), and for the purpose of voltage measurement employing the respective voltage converter (T1, T2, T3), the interconnected bus-bar system part respectively forming a switching complex is assigned section coupling relays (BC 123...) for reproducing the switching complex of the circuit arrangement which corresponds to the switching situation of the bus-bar system, additional branch relays (BC 171...) for connecting a measuring line of the circuit arrangement to a voltage converter (T1, T2, T3) of the bus-bar system, and is assigned branch interrogating relays (BC45, K11, K12...) which when incorporating a plurality of branches in a switching complex control the additional branch relays (BC171...) in accordance with the connection of only one single voltage converter (T1, T2, T3) to the respective switching complex of the circuit arrangement, characterised by the combination of the following features :

a) each bus-bar line of each reproduced branch, on connection thereof, is assigned a branch control relay (BC3, K1, K2, K3...) which is operated by auxiliary contacts of the branching switching means of the bus-bar system and possesses change-over contacts whose normally-closed contacts commonly form a series connection in the excitation circuit of each branch interrogating relay (BC45, K11, K12...) and operate the latter in the closed state of the series connection, whereas each of the normally-open contacts is arranged in the excitation circuit of an additional branch relay (BC171...), assigned to the normally-open contact in order to operate the additional branch relay ;

b) each coupling path of bus-bar lines is assigned a coupling path control relay (BC123...) which can be energised by auxiliary contacts of the coupling switching means of the bus-bar system with completed coupling, and is assigned a section coupling relay (BC123...) for coupling the connections of the circuit arrangement which are copied from the bus-bar lines of different bus-bar sections ;

c) the excitation circuits of the section coupling relays (BC123...) are controlled by the respectively assigned coupling path control relays (BC57...) and branch interrogating relays (BC45, K11, K12...) in such manner that the respective section coupling relay (BC123...) only responds when at the most the assigned coupling path control relay (BC57...) and one of the assigned branch interrogating relays (BC45, K11, K12...) are in the energised state.

2. A circuit arrangement as claimed in Claim 1, characterised in that in order to control the section coupling relays (BC123...) the branch interrogating relays (BC45, K11, K12...) are assigned coupling path control circuits (BC45...)

which are respectively formed from a poled relay (BC45, K15...) controlled by the branch interrogating relays (BC45, K11, K12...) and by voltage interrogating relays (BC45, K13, K14...) in such manner that they complete the energising circuits of the section coupling relays (BC123...), which prepare for the response, when at the most one of the branch interrogating relays (BC45, K11, K12...) is in energised state and then open the circuits when, by connecting a branch to a section which has previously not been provided with a branch, but is present in the switching complex, the de-energised branch interrogating relay (BC45, K11, K12...) prevents a control pulse acting as a ressetting pulse for the poled relay (BC45, K15) and the energised voltage interrogating relay (BC45, K13, K15...) prevents a new setting of the poled relay (BC45, K15), in order that the assigned coupling relay (BC123...) may be de-energised and separate the coupled sections.

3. A circuit arrangement as claimed in Claim 1 or 2, characterised in that surge-proof relays are used combined to form flat assembly groups which can be inserted into pre-wired standard frames, so as to be arranged in accordance with function groups, and the standard frames are prepared in standardized manner for the reproduction of a plurality of branches of a bus-bar system with two sections and the possible coupling paths in each case.

## Revendications

1. Montage électrique servant à simuler une installation de barres omnibus comportant des lignes de barres omnibus (SS1, SS2, SS3) dont chacune est constituée par un nombre de barres omnibus correspondant au type de l'installation, l'installation de barres omnibus pouvant être subdivisée en plusieurs sections séparées dont chacune est formée par un certain nombre de lignes de barres omnibus qui peuvent être reliées entre elles individuellement par l'intermédiaire de moyens de commutation de couplage auxquels sont associées des branches de dérivation (A1, A2, A3) munies de transformateurs de tensions respectifs (T1, T2, T3) qui peuvent être raccordées par l'intermédiaire de sectionneurs (Q1, Q2, Q3) et de disjoncteurs de puissance (Q0) aux lignes associées de barres omnibus, tandis que dans le but de réaliser la mesure de tension de la partie interconnectée, formant respectivement un complexe de commutation, de l'installation de barres omnibus, au montage sont associés, moyennant l'utilisation des transformateurs de tension existants (T1, T2, T3), des relais de couplage de sections (BC 123...) servant à simuler le complexe de commutation du montage, correspondant à l'état de commutation de l'installation de barres omnibus, des relais (DC 171...) de raccordement des branches de dérivation servant à relier une ligne de mesure du montage à un transformateur de tension (T1, T2, T3) de l'installation de barres omnibus, ainsi que des relais (BC 45, K11, K12...) d'interrogation des branches de dérivation qui, lors de l'introduction de plusieurs branches de dérivation dans un complexe de commutation, commandent les relais (BC 171,...) de raccordement des branches de dérivation dans le sens de la liaison d'un seul transformateur de tension (T1, T2, T3) au complexe de commutation considéré du montage, caractérisé par la combinaison des caractéristiques suivantes :

a) à chaque ligne de barres omnibus de chaque branche de dérivation simulée est associé un relais de commande de branche de dérivation (BC3, K1, K2, K3...) actionné lors du branchement de contacts auxiliaires des moyens de commutation des branches de dérivation de l'installation de barres omnibus, et qui peuvent être des contacts de commutation dont les contacts d'ouverture forment en commun un circuit série, ces contacts étant situés dans le circuit d'excitation de chaque relais d'interrogation des branches de dérivation (BC 45, K11, K12...), qui actionnent ce relais lorsque le circuit série est à l'état fermé, tandis que chacun des contacts de fermeture est disposé dans le circuit d'excitation d'un relais de raccordement de branches de dérivation (BC 171...), qui lui est associé, pour permettre l'actionnement de ce relais, à chaque voie de couplage de lignes de barres omnibus sont associés un relais de commande de voies de couplage (BC 57...) pouvant être excité par les contacts auxiliaires des moyens de commutation de couplage de l'installation de barres omnibus avec un couplage complet, et un relais de couplage de section (BC 123...) servant à réaliser les liaisons du montage simulant les lignes de barres omnibus de sections différentes de barres omnibus,

c) les circuits d'excitation des relais de couplage de section (BC 123...) sont commandés par les relais associés (BC 57...) de commande de voies de couplage et par les relais d'interrogation de branches de dérivation (BC 45, K11, K12...) de telle sorte que le relais respectif de couplage de section (BC 123...) répond uniquement lorsque le relais associé de commande de voies de couplage (BC 57...) et tout au plus l'un des relais associés d'interrogation de branches de dérivation (BC 45, K11, K12...) sont situés à l'état excité.

2. Montage suivant la revendication 1, caractérisé par le fait qu'aux relais d'interrogation de branches de dérivation (BC 45, K11, K12...) servant à la commande des relais de couplage de sections (BC123...) sont associés les circuits de commande de voies de couplage (BC 45...), qui sont formés chacun par un relais polarisé (BC 45, K15...) commandé par les relais d'interrogation de branches de dérivation (BC 45, K11, K12) et par des relais d'interrogation de tension (BC 45, K13, K14...) de telle sorte que ces relais (BC 45, K15...) ferment les circuits d'excitation des relais de couplage de sections (BC 123...), préparés pour répondre, lorsqu'au maximum l'un des relais d'interrogation de branches de dérivation (C 45, K11, K12...) est à l'état excité, et s'ouvrent lorsque par suite du raccordement d'une branche de dérivation à une section, à laquelle jusqu'alors aucune branche de dérivation n'a été raccordée, mais qui est située dans le complexe de commutation, le relais d'interrogation et la branche de dérivation (BC 45, K11, K12...) alors retombant émet une impulsion de commande en tant qu'impulsion de remise à l'état initial pour le relais polarisé (BC 45, K15...) et que le relais d'interrogation de tension (BC 45, K13, K14) alors excité empêche un nouveau positionnement du relais polarisé (BC 45, K15...) de sorte que le relais de couplage associé (BC 123...) retombe et déconnecte les sections accouplées.

3. Montage électrique suivant la revendication 1 ou 2, caractérisé par le fait qu'on utilise des relais aptes à réaliser un rebond, qui sont rassemblés, en étant rangés selon des groupes de fonctions, dans des modules plats enfichables dans des cadres standards précâblés, et que ces cadres standards sont préparés de façon normalisée pour la simulation de plusieurs dérivations d'une installation de barres omnibus comportant respectivement deux sections et les voies d'accouplage possibles.

FIG 1

FIG 2

0 064 094

FIG 3

FIG 4A | FIG 4B

FIG 4

FIG 4A

0 064 094

FIG 4B